# EUROPEAN PATENT APPLICATION

(11) **EP 1 591 878 A1**
(43) Date of publication of application: **02.11.2005**
(21) Application number: 05004856.0
(22) Date of filing: 04.03.2005
(51) Int. Cl.: G06F 3/033

(54) **Input system having a plurality of coordinate input devices for detecting a position designated by a pointing device**

(30) Priority: 29.03.2004 JP 2004094958
(71) Applicant: Wacom Co., Ltd., Saitama 349-1148 (JP)
(72) Inventor: Chikami, Toshihide, Kuki-shi Saitama, 346-0016 (JP)
(74) Representative: Richardt, Markus Albert

(57) **Abstract**

The present invention provides an input system capable of assuring the excellent performance of each of coordinate input devices arranged. A tablet and a flat panel display (FPD) tablet are connected to a computer to realize the input system. Each tablet includes loop coils and detects a position designated by an input pen using radio waves generated from the loop coils. In the input system, when the tablet can detect the position designated by the input pen, the generation of the radio waves from the loop coils of the FPD tablet is interrupted. When the FPD tablet can detect the position designated by the input pen, the generation of the radio waves from the loop coils of the tablet is interrupted.

## Description

### BACKGROUND OF THE INVENTION

### Field of the Invention

The present invention relates to an input system including coordinate input devices, the coordinate input device, and a program for realizing the input system.

### Description of the Related Art

Universal Serial Bus (USB) is in widespread use as an interface standard for connecting a coordinate input device to a personal computer. In the use of the USB interface, many input devices can be easily connected to one personal computer.

For example, when a plurality of well-known coordinate input devices (also called tablets) using a pen-type pointing device are arranged and used, the coordinate input devices can be used with one pointing device, resulting in excellent ease of operation.

In the case where the coordinate input devices are arranged close to each other, however, the performance of each device may be degraded. In other words, most of the coordinate input devices are electrically or magnetically coupled to the corresponding pointing device and utilize a method for detecting coordinates designated by the pointing device. When the coordinate input devices are arranged close to each other, therefore, the electrical or magnetic couplings between the pointing device and the respective coordinate input devices may interfere with each other. Disadvantageously, the coordinates cannot be properly detected.

Japanese Unexamined Patent Application Publication No. 5-189136 discloses a tablet control system for selecting a coordinate input device to be used from a plurality of coordinate input devices in use of the coordinate input devices arranged.

According to the system, a plurality of tablets (coordinate input devices) are connected to a tablet selection circuit, the tablet selection circuit selects any one of the tablets, and the selected tablet is controlled to scan a coordinate detection plane. The tablets can be operated using one stylus pen (pointing device).

As disclosed in Japanese Unexamined Patent Application Publication No. 5-189136, the tablet control system requires the tablet selection circuit and the tablets for scanning on the coordinate detection plane under control of the tablet selection circuit. The tablet selection circuit and the tablets are peculiar to this tablet control system. The system cannot be achieved using general-purpose tablets.

### SUMMARY OF THE INVENTION

The present invention provides an input system, a coordinate input device, a computer program product, an electronic device, such as a computer, and an electronic circuit in accordance with the respective independent claims.

Preferred embodiments are given in the dependent claims.

The present invention is advantageous as it can provide an input system capable of ensuring the excellent performance of each of coordinate input devices arranged and used by one user.

For example, the present invention provides an input system having a plurality of coordinate input devices for performing a detection operation to detect a position designated by a pointing device and generating the coordinates of the position detected by the detection operation, the system including: a specifying unit for, among the coordinate input devices, specifying one or a plurality of coordinate input devices in a state in which the position designated by the pointing device is not detected; and a change instructing unit for controlling the detection operation of the coordinate input device specified by the specifying unit.

According to an embodiment of the present invention, when one of the coordinate input devices detects the position designated by the pointing device, the specifying unit may specify the other or the other devices as a coordinate input device or coordinate input devices in the state in which the position designated by the pointing device is not detected.

According to the present invention, preferably, each coordinate input device includes a detection-operation control unit for changing the detection operation to a specific state when receiving a predetermined control signal, and the change instructing unit transmits the predetermined control signal to the coordinate input device specified by the specifying unit.

According to the present invention, preferably, each coordinate input device includes a loop coil and generates radio waves from the loop coil to detect the position designated by the pointing device using the radio waves, and when receiving the predetermined signal, the detection-operation control unit of the coordinate input device interrupts the operation for generating the radio waves from the loop coil.

According to the present invention, preferably, each coordinate input device includes a plurality of loop coils and generates radio waves from the loop coils to detect the position designated by the pointing device using the radio waves, and when receiving the predetermined signal, the detection-operation control unit of the coordinate input device limits the loop coils for generating the radio waves in the detection operation to only some of the loop coils.

In the input system according to the present invention, the coordinate input device in the state, in which the position designated by the pointing device is not detected, is specified and the detection operation of the specified coordinate input device is controlled, so that the detection operation of the device which need not to detect the designated position can be interrupted, or the frequency of the detection operation or the range of the detection operation can be limited. Thus, in the use of a plurality of coordinate input devices, the operation of the coordinate input device which has to perform the detection operation can be prevented from being influenced by the detection operation of the other coordinate input device or devices which need not to perform the detection operation. According to the present invention, therefore, when a plurality of coordinate input devices are used, the performance of each coordinate input device can be prevented from degrading. Further, since the unnecessary detection operation is prevented, unnecessary power consumption can be eliminated.

When each coordinate input device includes a plurality of loop coils and generates radio waves from the loop coils to detect the position designated by the pointing device using the radio waves, the operations of the respective coordinate input devices may probably affect each other. According to the present invention, as necessary, the detection-operation control unit included in each coordinate input device interrupts the operation for generating radio waves from the loop coils or limits the loop coils generating radio waves in the detection operation to only some of the loop coils. Thus, the detection operations of the respective coordinate input devices can be reliably prevented from affecting each other.

According to the present invention, when one of the plurality of coordinate input devices can detect the position designated by the pointing device, the other device or the other devices are specified as a coordinate input device or coordinate input devices in the state in which the position designated by the pointing device is not detected. Thus, the coordinate input device which need not to perform the detection operation can be more easily specified.

When the present invention is applied to a case where a plurality of coordinate input devices for detecting a position designated by a pointing device and generating the coordinates of the detected position are arranged and used to conduct work requiring a wide input area or work requiring various kinds of operations, the operating efficiency can be increased. For example, in executing a graphics application program through a computer, a user has to perform a drawing operation to trace a line and color an image and a setting operation to perform various settings in the drawing operation. If the user uses different coordinate input devices for the drawing operation and the setting operation, the operating efficiency can be increased. When the present invention is applied to the above example, advantageously, the performance of each coordinate input device can be prevented from degrading even in use of the coordinate input devices.

### BRIEF DESCRIPTION OF THE DRAWINGS

Fig. 1 is a schematic diagram of the structure of an input system according to an embodiment of the present invention;
Fig. 2 shows block diagrams of the respective internal structures of a tablet and an input pen shown in Fig. 1;
Fig. 3 is a block diagram of the detailed configuration of a processing circuit shown in Fig. 2;
Fig. 4 shows block diagrams of the respective internal structures of a flat panel display (FPD) tablet and the input pen in Fig. 1;
Fig. 5 is a block diagram of the detailed configuration of a processing circuit shown in Fig. 4;
Fig. 6 is a block diagram of the functional structure of a computer shown in Fig. 1;
Fig. 7 is a flowchart of a process of controlling coordinate input devices, the process being executed by the computer in Fig. 1;
Fig. 8 is a flowchart of another example of the process of Fig. 7;
Figs. 9A and 9B show examples of limited detection areas in the FPD tablet shown in Fig. 1; and
Fig. 10 is a schematic diagram of the structure of an input system according to a modification of the embodiment of the present invention.

### DESCRIPTION OF THE PREFERRED EMBODIMENTS

An embodiment of the present invention will now be described below with reference to the drawings.

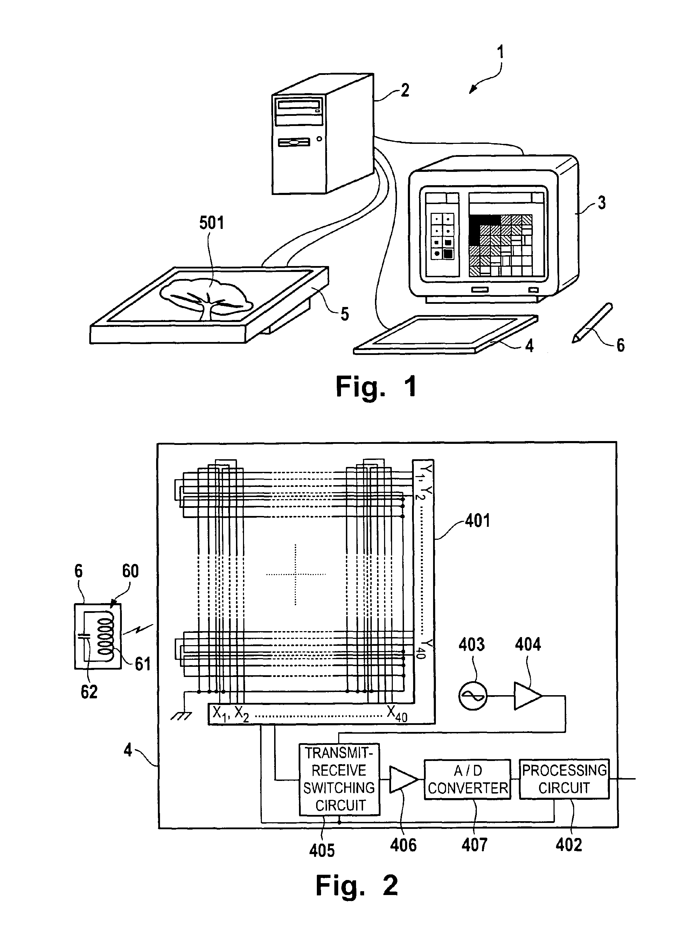

Fig. 1 schematically shows the structure of an input system 1 according to the embodiment of the present invention. Referring to Fig. 1, the input system 1 includes a computer 2, a monitor 3, a tablet 4, and a flat panel display (FPD) tablet 5.

The computer 2 is a general personal computer and is connected to the monitor 3, the tablet 4, and the FPD tablet 5.

The computer 2 executes processes based on various application programs in accordance with inputs supplied from the tablet 4 and the FPD tablet 5. The computer 2 generates display signals for various screens, e.g., an execution screen of the application program to the monitor 3 and the FPD tablet 5.

The monitor 3 includes a display screen of a cathode ray tube (CRT) or a liquid crystal display (LCD) panel and displays various screens based on display signals generated from the computer 2.

The tablet 4 includes a housing having a flat portion serving as an operation area for an input pen 6 and a circuit for detecting a position designated by the input pen 6. The tablet 4 functions as a coordinate input device for detecting a position designated by the input pen 6 in the operation area and generating an operation signal indicating the coordinates corresponding to the position to the computer 2.

The FPD tablet 5 includes a liquid crystal display panel 501 attached in a substantially flat housing and displays various screens on the liquid crystal display panel 501 on the basis of display signals generated from the computer 2.

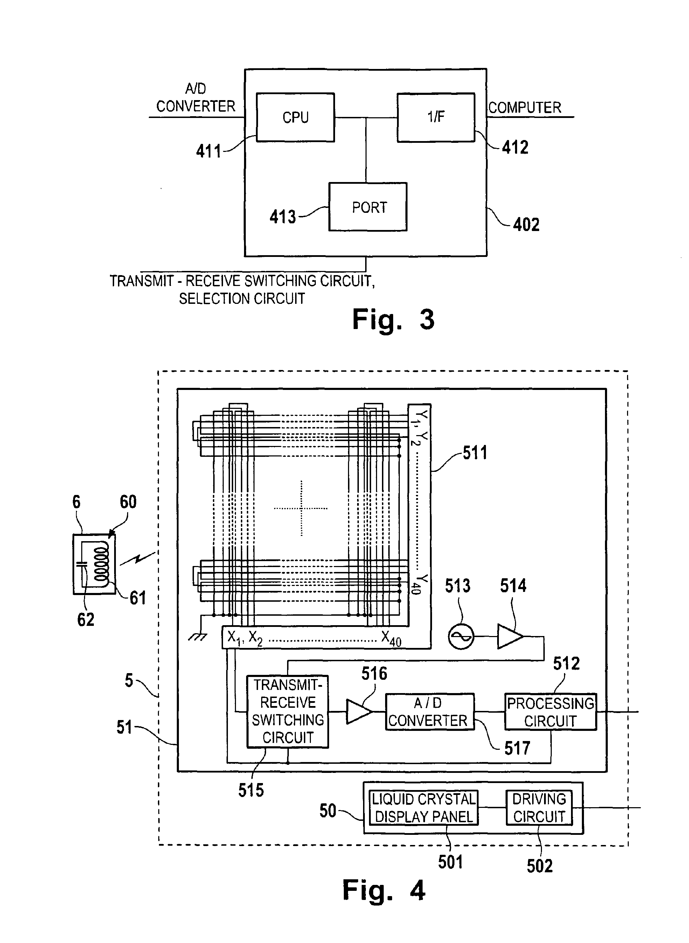

The FPD tablet 5 includes an input unit 51 (refer to Fig. 4) for detecting a position designated by the input pen 6. The input unit 51 is arranged below (on the rear of) the liquid crystal display panel 501. When the input pen 6 is operated on the liquid crystal display panel 501, the FPD tablet 5 detects the position designated by the operation of the input pen 6 and generates an operation signal indicating the coordinates of the detected position to the computer 2.

In other words, the FPD tablet 5 serves as a display of the computer 2 and also functions as a coordinate input device of the computer 2. In the FPD tablet 5, the region on the liquid crystal display panel 501 serves as an operation area for the input pen 6.

The input system 1 further includes one input pen 6. The input pen 6 includes a pen-shaped main body and a resonant circuit 60 (refer to Fig. 4), which will be described below.

The input pen 6 is used as a pointing device for designating a position on each of the tablet 4 and the FPD tablet 5. A user of the input system 1 designates an arbitrary position in the operation area on the tablet 4 or the FPD tablet 5 using the input pen 6, thus inputting coordinates to the computer 2.

Fig. 1 shows an example of a state in which a graphics application program is executed by the computer 2. In Fig. 1, a drawing area is displayed in the liquid crystal display panel 501 of the FPD tablet 5. A drawing menu screen is displayed in the monitor 3.

In the example of Fig. 1, when the input pen 6 is operated on the liquid crystal display panel 501, a picture is drawn in the drawing area displayed on the liquid crystal display panel 501. The monitor 3 displays a menu window to set the shape and size of a pen for drawing and a palette window to set a color to be drawn. Various settings are available on the tablet 4 with the input pen 6.

In other words, in the example of Fig. 1, the liquid crystal display panel 501 is used as a main display of the input system 1 and the monitor 3 is used as a sub display thereof.

In use of the input system 1 in Fig. 1, the user can draw a picture on the liquid crystal display panel 501 using the input pen 6 while viewing the drawing area displayed in the liquid crystal display panel 501. In drawing, as necessary, the user further operates the input pen 6 in the operation area on the tablet 4 to set the shape or size of the pen point or a color to be painted.

Fig. 2 includes block diagrams of the respective internal structures of the tablet 4 and the input pen 6.

As mentioned above, the tablet 4 has the flat portion of a predetermined size as the operation area for the input pen 6. The tablet 4 includes loop coils X1 to X40 and loop coils Y1 to Y40 embedded in the flat portion, a selection circuit 401, a processing circuit 402, an oscillator 403, an amplifier 404, a transmit-receive switching circuit 405, an amplifier 406, and an analog-to-digital (A/D) converter 407. The processing circuit 402 is connected to the computer 2.

The input pen 6 has therein a resonant circuit 60 including a coil 61 and a capacitor 62.

The X axis and the Y axis are previously set in the flat portion of the tablet 4. The forty loop coils X1 to X40 are arranged in the X-axis direction. Both ends of each coil are connected to the selection circuit 401. The forty loop coils Y1 to Y40 are arranged in the Y-axis direction. Both ends of each coil are connected to the selection circuit 401.

The selection circuit 401 selects any one of the loop coils X1 to X40 and the loop coils Y1 to Y40 in accordance with control by the processing circuit 402.

The oscillator 403 generates a signal with a predetermined oscillation frequency to the amplifier 404. The amplifier 404 amplifies the signal supplied from the oscillator 403 and generates the resultant signal to the transmit-receive switching circuit 405.

The transmit-receive switching circuit 405 switches between a transmit mode and a receive mode in accordance with control by the processing circuit 402. In the transmit mode, the signal supplied from the amplifier 404 is output to the selection circuit 401. In the receive mode, a signal supplied from the selection circuit 401 is generated to the amplifier 406.

The amplifier 406 amplifies the signal supplied from the transmit-receive switching circuit 405 and generates the resultant signal to the A/D converter 407. The A/D converter 407 converts the signal, which is analog, supplied from the amplifier 406 into a digital signal and then generates the resultant signal to the processing circuit 402.

When the transmit-receive switching circuit 405 switches to the transmit mode, on the basis of a signal generated by the oscillator 403, radio waves with a frequency matching the oscillation frequency of the resonant circuit 60 are generated from the loop coil selected by the selection circuit 401. In this instance, if the input pen 6 is placed in the operation area of the tablet 4, the coil 61 of the input pen 6 receives the radio waves generated from the loop coil of the tablet 4. The capacitor 62 is charged by an induced voltage generated by the radio waves, so that energy is stored in the resonant circuit 60 (E=1/2(CV²+LI²)).

When the transmit-receive switching circuit 405 switches to the receive mode, the radio waves are not generated from the loop coil of the tablet 4. At that time, the resonant circuit 60 starts free oscillation. Current generated by the free oscillation flows through the coil 61, so that the current is consumed. Thus, the coil 61 generates radio waves with a predetermined frequency.

In the tablet 4, an induced voltage is generated in the selected loop coil by the radio waves generated from the coil 61 of the input pen 6. The induced voltage generated in the loop coil selected by the selection circuit 401 is output to the amplifier 406 through the transmit-receive switching circuit 405. The voltage is amplified by the amplifier 406 and is then supplied to the A/D converter 407.

The operation in the transmit mode and that in the receive mode are repeatedly executed while the loop coils X1 to X40 and the loop coils Y1 to Y40 are sequentially selected by the selection circuit 401, so that the induced voltages generated in the loop coils are supplied to the A/D converter 407. The A/D converter 407 converts each input voltage into a digital signal and generates the signal to the processing circuit 402.

Fig. 3 is a block diagram of the functional structure of the processing circuit 402. Referring to Fig. 3, the processing circuit 402 includes a central processing unit (CPU) 411, an interface (I/F) 412, and a port 413.

In the processing circuit 402, the CPU 411 executes arithmetic operation on the digital signal supplied from the A/D converter 407 to obtain a position designated by the input pen 6 in the operation area and generates a signal indicating the coordinates of the position to the I/F 412. The I/F 412 transmits and receives signals to/from the computer 2. In other words, the I/F 412 generates a signal supplied from the CPU 411 to the computer 2 and receives a signal supplied from the computer 2 to the CPU 411.

The processing circuit 402 includes the port 413. The port 413 transmits and receives signals to/from the selection circuit 401 and the transmit-receive switching circuit 405. In accordance with control by the CPU 411, the port 413 controls the selection circuit 401 to select a loop coil at predetermined time in the transmit or receive mode. The port 413 further controls the transmit-receive switching circuit 405 to switch between the transmit mode and the receive mode at predetermined time.

When receiving a transmission interruption command from the computer 2 through the I/F 412, the CPU 411 allows the port 413 to control the transmit-receive switching circuit 405 so that the transmit-receive switching circuit 405 is held in the receive mode for a predetermined period of time.

Fig. 4 is a block diagram of the internal structure of the FPD tablet 5. Referring to Fig. 4, the FPD tablet 5 includes a display unit 50 and the input unit 51.

The display unit 50 includes the liquid crystal display panel 501 and a driving circuit 502, which is connected to the computer 2.

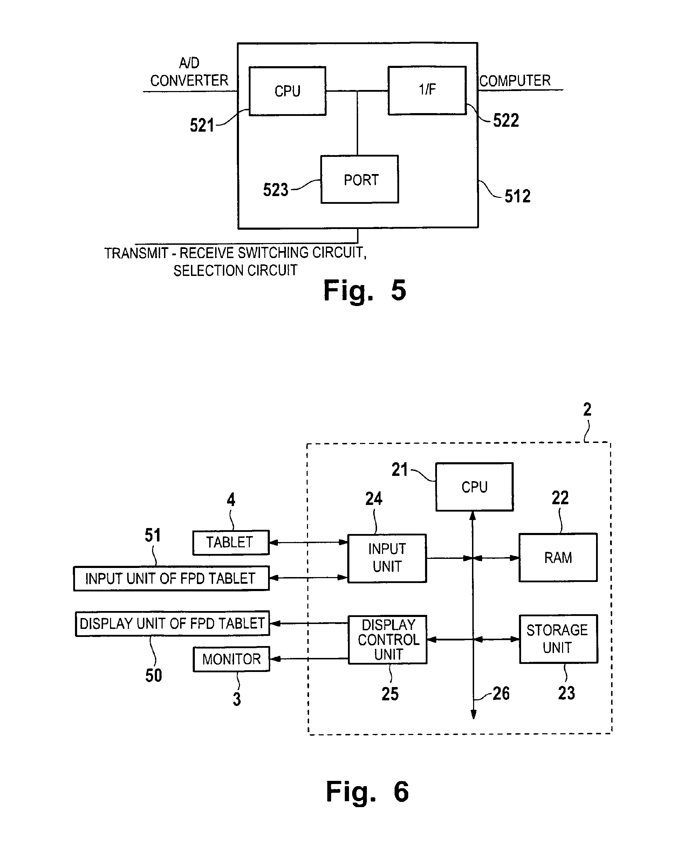

The driving circuit 502 drives the liquid crystal display panel 501 on the basis of a display signal supplied from a display control unit 25 (refer to Fig. 6) of the computer 2, thus displaying various screens in the liquid crystal display panel 501.

The display unit 50 may include a backlight device (not shown) for irradiating the rear of the liquid crystal display panel 501 and a power supply circuit (not shown) for supplying power to components, including the backlight device, of the display unit 50.

As mentioned above, the housing of the FPD tablet 5 has the flat portion with a predetermined size. The liquid crystal display panel 501 is attached to the flat portion. Many loop coils are embedded below the liquid crystal display panel 501. The operation of the input pen 6 is detected using the loop coils.

In the FPD tablet 5, the input unit 51 includes loop coils X1 to X40 and loop coils Y1 to Y40 embedded below the liquid crystal display panel 501, a selection circuit 511, a processing circuit 512, an oscillator 513, an amplifier 514, a transmit-receive switching circuit 515, an amplifier 516, and an analog-to-digital (A/D) converter 517. The processing circuit 512 is connected to the computer 2.

The loop coils X1 to X40, the loop coils Y1 to Y40, the selection circuit 511, the processing circuit 512, the amplifier 514, the transmit-receive switching circuit 515, the amplifier 516, and the A/D converter 517 in the input unit 51 have the same functions as those of the loop coils X1 to X40, the loop coils Y1 to Y40, the selection circuit 401, the processing circuit 402, the oscillator 403, the amplifier 404, the transmit-receive switching circuit 405, the amplifier 406, and the A/D converter 407 of the tablet 4 in Fig. 2.

In other words, the selection circuit 511 selects any one of the loop coils X1 to X40 and the loop coils Y1 to Y40 in accordance with control by the processing circuit 512. The oscillator 513 generates a signal with a predetermined oscillation frequency to the amplifier 514. The amplifier 514 amplifies the signal supplied from the oscillator 513 and generates the resultant signal to the transmit-receive switching circuit 515. The transmit-receive switching circuit 515 switches between a transmit mode and a receive mode in accordance with control by the processing circuit 512. In the transmit mode, the signal supplied from the amplifier 514 is output to the selection circuit 511. In the receive mode, a signal supplied from the selection circuit 511 is generated to the amplifier 516. The amplifier 516 amplifies the signal supplied from the transmit-receive switching circuit 515 and generates the resultant signal to the A/D converter 517. The A/D converter 517 analyzes the signal supplied from the amplifier 516 to detect a position designated by the input pen 6 and generates an operation signal indicating the coordinates of the detected position to the processing circuit 512.

When the transmit-receive switching circuit 515 switches to the transmit mode, on the basis of a signal generated by the oscillator 513, radio waves with a frequency matching the oscillation frequency of the resonant circuit 60 are generated from the loop coil selected by the selection circuit 511.

When the transmit-receive switching circuit 515 switches to the receive mode, in the FPD tablet 5, an induced voltage is generated in the selected loop coil by radio waves generated from the coil 61 of the input pen 6. The induced voltage generated in the loop coil selected by the selection circuit 511 is output to the amplifier 516 through the transmit-receive switching circuit 515. The voltage is amplified by the amplifier 516 and is then supplied to the A/D converter 517.

The operation in the transmit mode and that in the receive mode are repeatedly executed while the loop coils X1 to X40 and the loop coils Y1 to Y40 are sequentially selected by the selection circuit 511, so that the induced voltages generated in the loop coils are supplied to the A/D converter 517. The A/D converter 517 converts each input voltage into a digital signal and generates the resultant signal to the processing circuit 512.

Fig. 5 is a block diagram of the functional structure of the processing circuit 512. Referring to Fig. 5, the processing circuit 512 includes a CPU 521, an I/F 522, and a port 523.

In the processing circuit 512, the CPU 521 executes arithmetic operation on the digital signal supplied from the A/D converter 517 to obtain a position designated by the input pen 6 in the operation area, i.e., the liquid crystal display panel 501 and generates a signal indicating the coordinates of the position to the I/F 522. The I/F 522 transmits the signal supplied from the CPU 521 to the computer 2 and receives a signal supplied from the computer 2 to the CPU 521.

The processing circuit 512 includes the port 523. The port 523 transmits and receives signals to/from the selection circuit 511 and the transmit-receive switching circuit 515. In accordance with control by the CPU 521, the port 523 controls the selection circuit 511 to select a loop coil at predetermined time in the transmit or receive mode. The port 523 further controls the transmit-receive switching circuit 515 to switch between the transmit mode and the receive mode at predetermined time.

When receiving a transmission interruption command from the computer 2 through the I/F 522, the CPU 521 allows the port 523 to control the transmit-receive switching circuit 515 so that the transmit-receive switching circuit 515 is held in the receive mode for a predetermined period of time.

The functions and the operations of the respective components included in the input unit 51 are the same as those of the respective components in the tablet 4. The gains of the amplifiers 514 and 516 in the input unit 51 may be different from those of the amplifiers 404 and 406 in the tablet 4.

In the FPD tablet 5, the liquid crystal display panel 501 is placed between the input pen 6 and the loop coils X1 to X40 and Y1 to Y40. Accordingly, the input unit 51 may be prevented from detecting the position of the input pen 6 due to the influence of noise generated in the backlight device (not shown) or the power supply circuit (not shown) in the display unit 50.

To eliminate the above problem, in the input unit 51, the gain of the amplifier 514 is higher than that of the amplifier 404, thus increasing the radio power generated from the loop coil in the transmit mode. Advantageously, the resonant circuit 60 can receive the radio waves generated from the loop coil. In addition, the ratio output generated from the loop coil is increased, thus increasing the induced voltage generated in the resonant circuit 60. This results in an increase of the radio power generated from the resonant circuit 60 in the receive mode. Advantageously, the radio waves generated from the resonant circuit 60 can be received with reliability by the loop coil of the input unit 51, so that the induced voltage generated in the loop coil can be faithfully detected. Therefore, the radio power generated from each of the loop coils X1 to X40 and Y1 to Y40 in the input unit 51 is larger than that in the tablet 4.

For the sake of convenience, Fig. 2 shows the simplest structure of the resonant circuit 60 in the input pen 6, i.e., the resonant circuit 60 including the coil 61 and the capacitor 62. The resonant circuit 60 can include another capacitor and a switch. In this case, the capacitor is connected in parallel to the coil 61 and the capacitor 62 and the switch is connected to the capacitor in series. When the switch is turned on to connect the capacitor in parallel to the capacitor 62, the phase or period of radio waves generated from the coil 61 changes in the receive mode. The change in phase or period is detected in the tablet 4, so that whether the switch has been operated in the input pen 6 can be detected. When the present invention is applied to the present structure, the same advantages as those in the structure in Fig. 2 can be obtained.

Fig. 6 is a block diagram of the functional structure of the computer 2. Referring to Fig. 2, the computer 2 includes a CPU 21, a random access memory (RAM) 22, a storage unit 23, an input unit 24, and the display control unit 25. The respective components are connected through a bus 26.

The CPU 21 reads out a program stored in the storage unit 23 and executes the program to control the respective components of the computer 2. Specifically, the CPU 21 reads out a primary control program stored in the storage unit 23 and executes the program to control the tablet 4 and the input unit 51 of the FPD tablet 5, which are externally connected to the input unit 24, thus receiving inputs from the tablet 4 and the input unit 51. In accordance with an instruction supplied from the tablet 4 or the FPD tablet 5, the CPU 21 reads out a program such as a graphics application program stored in the storage unit 23 to execute the program, generates display information to display a screen related to the application program in execution to the display control unit 25, and allows the display screen of the monitor 3 or the liquid crystal display panel 501 of the FPD tablet 5 to display the screen.

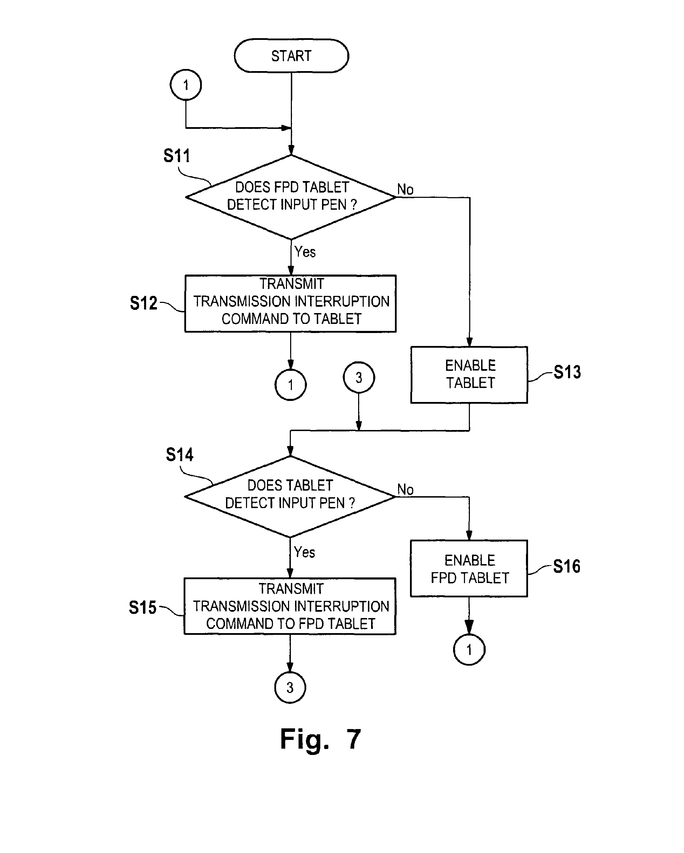

Further, the CPU 21 reads out a program for controlling coordinate input devices from the storage unit 23 to execute the program, thus executing a process of controlling coordinate input devices (refer to Fig. 7), which will be described below.

In the process of controlling coordinate input devices, the CPU 21 determines whether the FPD tablet 5 can detect a position designated by the input pen 6. When the FPD tablet 5 cannot detect the position of the input pen 6 but the tablet 4 can detect the input pen 6, the CPU 21 transmits a transmission interruption command to the FPD tablet 5. The CPU 21 executes the same process with respect to the tablet 4. When the tablet 4 cannot detect the position of the input pen 6 but the FPD tablet 5 can detect the input pen 6, the CPU 21 transmits the transmission interruption command to the tablet 4.

The transmission interruption command is generated to the tablet 4 or the FPD tablet 5 so that the corresponding tablet does not perform the operation for the transmit mode. When receiving the transmission interruption command, the tablet 4 or the FPD tablet 5 does not operate in the transmit mode, so that radio waves are not generated from any loop coil.

The RAM 22 has a work area to temporarily store various programs executed by the CPU 21 and data concerned with the programs.

The storage unit 23 includes a magnetic or optical recording medium or a semiconductor memory device to store various programs executed by the CPU 21 and data related to the programs.

The input unit 24 is connected to the tablet 4 and the input unit 51 of the FPD tablet 5. The input unit 24 receives an operation signal from the tablet 4 or the input unit 51, analyzes the signal, and generates information indicating the input operation in the tablet 4 or the FPD tablet 5 to the CPU 21.

In addition, the input unit 24 transmits an excitation OFF command to the tablet 4 or the input unit 51 of the FPD tablet 5 in accordance with control by the CPU 21.

On the basis of display information supplied from the CPU 21, the display control unit 25 generates display signals to display various figures on the display screens and generates the signals to the monitor 3 and the display unit 50 of the FPD tablet 5. The display signals generated from the display control unit 25 to the monitor 3 and the display unit 50 of the FPD tablet 5 may be analog or digital.

Fig. 7 is a flowchart of the process of controlling coordinate input devices, the process being executed by the computer 2.

Referring to Fig. 7, in the process, in step S11, the CPU 21 determines whether the input unit 51 of the FPD tablet 5 can detect the position of the input pen 6.

When it is determined in step S11 that the input unit 51 can detect the position of the input pen 6, the process proceeds to step S12. The CPU 21 controls the input unit 24 to transmit a transmission interruption command to the tablet 4. The process is returned to step S11. In this instance, on the basis of the transmission interruption command sent from the input unit 24 in step S12, the tablet 4 is kept in the receive mode for a predetermined period of time.

In step S11, if the input unit 51 cannot detect the position of the input pen 6, the process proceeds to step S13. The CPU 21 transmits a command to start the operation of the tablet 4 to the tablet 4, thus enabling the tablet 4. The process proceeds to step S14.

In step S14, the CPU 21 determines whether the tablet 4 can detect the position of the input pen 6. If the tablet 4 can detect the position of the input pen 6, the process proceeds to step S15. The CPU 21 controls the input unit 24 to transmit a transmission interruption command to the FPD tablet 5. The process is returned to step S14. On the basis of the transmission interruption command generated from the input unit 24 in step S15, the FPD tablet 5 is held in the receive mode for a predetermined period of time.

In step S14, if the tablet 4 cannot detect the position of the input pen 6, the process proceeds to step S16. The CPU 21 transmits a command to start the operation of the FPD tablet 5 to the FPD tablet 5, thus enabling the FPD tablet 5. The process is returned to step S11.

In the above-mentioned control process, regarding the determination in step S11, for example, the transmit mode and the receive mode of the FPD tablet 5 are repeatedly executed while the loop coils are sequentially selected by the selection circuit 511 and the detection of the position of the input pen 6 is tried, so that the determination can be made based on whether an enough induced voltage is generated in the loop coil in the receive mode. In addition, regarding the determination in step S14, for example, the transmit mode and the receive mode of the tablet 4 are repeatedly executed while the loop coils are sequentially selected by the selection circuit 401 and the detection of the position of the input pen 6 is tried, so that the determination can be made based on whether an enough induced voltage is generated in the loop coil in the receive mode.

The above-mentioned control process is executed every predetermined time of period, so that either the tablet 4 or the FPD tablet 5 is specified to be in a state in which the position of the input pen 6 is not detected. In the other tablet in which the position of the input pen 6 can be detected, the transmit mode and the receive mode are successively executed. In the specified tablet in the above state in which the position of the input pen 6 is not detected, the transmit mode is not executed.

As mentioned above, the radio power generated from the loop coil in the FPD tablet 5 is higher than that generated from the loop coil in the tablet 4. Accordingly, when the tablet 4 is arranged close to the FPD tablet 5, radio waves generated from the loop coil of the FPD tablet 5 in the transmit mode may affect the loop coil of the tablet 4 in the receive mode.

The reason is that since the tablet 4 and the FPD tablet 5 are operated using one input pen 6, both of the tablet 4 and the FPD tablet 5 generate radio waves with the frequency matching the oscillation frequency of the resonant circuit 60 built in the input pen 6.

The radio power generated from the loop coil of the tablet 4 is lower than that of the FPD tablet 5. If the difference therebetween is not large, however, the radio waves from the loop coil of the tablet 4 may affect the FPD tablet 5 in the receive mode.

According to the input system 1 of the present embodiment, in the execution of the above control process, if the position of the input pen 6 can be detected in either the tablet 4 or the FPD tablet 5, the operation in the transmit mode is not performed in the other tablet in which the position of the input pen 6 is not detected. Even when the tablet 4 is arranged close to the FPD tablet 5, accordingly, there is no fear that the radio waves of the tablet 4 and the FPD tablet 5 may affect each other, i.e., the operations of the tablet 4 and the FPD tablet 5. Therefore, if the tablet 4 is close to the FPD tablet 5, the performance of each tablet is not lowered. Thus, the tablet 4 and the FPD tablet 5 can be flexibly arranged to suit an application purpose or the preferences of the user.

In other words, when the user arranges and uses a plurality of coordinate input devices such as the tablet 4 and the FPD tablet 5, the performance of each tablet can be prevented from degrading. In the use of the coordinate input devices with one input pen 6, the coordinate input devices use radio waves with the same frequency band, so that the operation of each device is sensitive to the radio waves of the other device. According to the present invention, advantageously, the above problem can be eliminated. In the case where one of the coordinate input devices, e.g., the FPD tablet 5 generates radio waves with high power, the advantage in that the performance of each device can be prevented from degrading is extremely useful.

In addition, the device in the state in which the position of the input pen 6 is not detected is specified and the operation in the transmit mode is not performed in the specified device, thus preventing the unnecessary operation to detect the position of the input pen 6. Advantageously, wasteful power consumption can be eliminated.

Regarding the components of the input system 1, as long as the tablet 4 and the FPD tablet 5 can be connected to the computer 2 so that the computer 2 can transmit a transmission interruption command to each of the tablet 4 and the FPD tablet 5, any type computer may be used. For the tablet 4 and the FPD tablet 5, as long as each tablet has a function for controlling the operation in the transmit mode when receiving the transmission interruption command from the computer 2, any tablet can be used. Accordingly, the input system 1 can be easily realized by a general-purpose computer, tablet and FPD tablet with low cost.

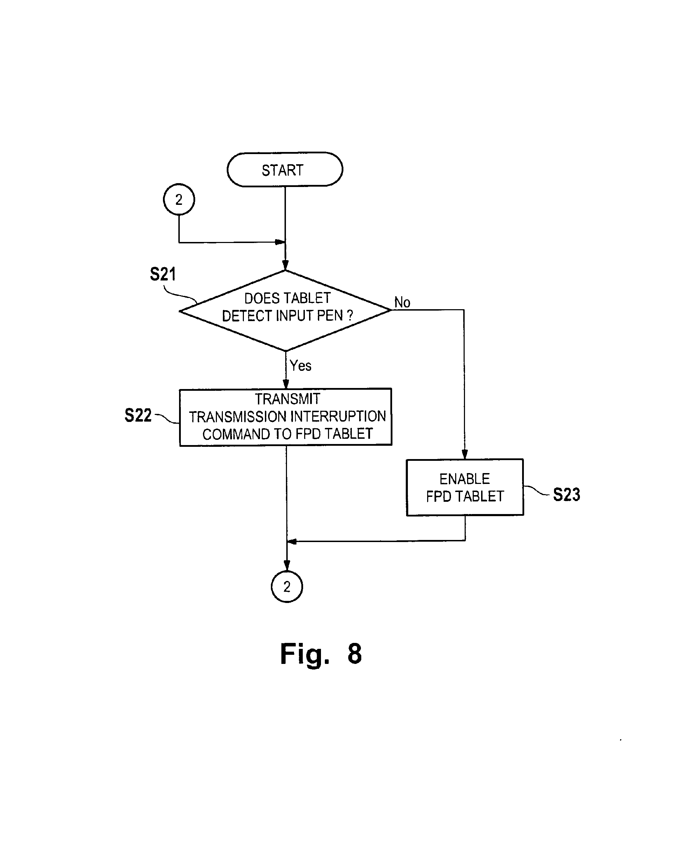

Fig. 8 is a flowchart of another example of the process of controlling coordinate input devices of Fig. 7.

Referring to Fig. 8, in step S21 of the present process, the CPU 21 determines whether the tablet 4 can detect the position of the input pen 6.

If the tablet 4 can detect the position of the input pen 6, the process proceeds to step S22. The CPU 21 allows the input unit 24 to transmit a transmission interruption command to the FPD tablet 5. The process is returned to step S21.

If the tablet 4 cannot detect the position of the input pen 6 in step S21, the process proceeds to step S23. The CPU 21 transmits a command to start the operation of the FPD tablet 5 to the FPD tablet 5, thus enabling the FPD tablet 5. The process is returned to step S21.

In the process of Fig. 8, when the tablet 4 can detect the position of the input pen 6, the operation of the FPD tablet 5 is stopped. If the tablet 4 cannot detect the position of the input pen 6, the FPD tablet 5 is enabled. According to the process, the FPD tablet 5 is disabled or enabled depending on the detection state of the tablet 4. Thus, the operation in the transmit mode of the FPD tablet 5 is performed only when necessary.

Particularly, the process of Fig. 8 is effective in the case where the FPD tablet 5 generates radio waves with higher power than the tablet 4. In other words, a device with high power consumption is controlled, thus reducing power consumption with efficiency. In addition, the device with higher radio power may probably affect the operation of the other device. Only the operation of the device with higher radio power is disabled or enabled, so that the performance of the other device can be increased with efficiency.

In the above description regarding the present embodiment, when receiving a transmission interruption command sent from the input unit 24 of the computer 2, the tablet 4 or the FPD tablet 5 does not operate in the transmit mode. The present invention is not limited to the above case. Only some of the loop coils can generate radio waves in the transmit mode.

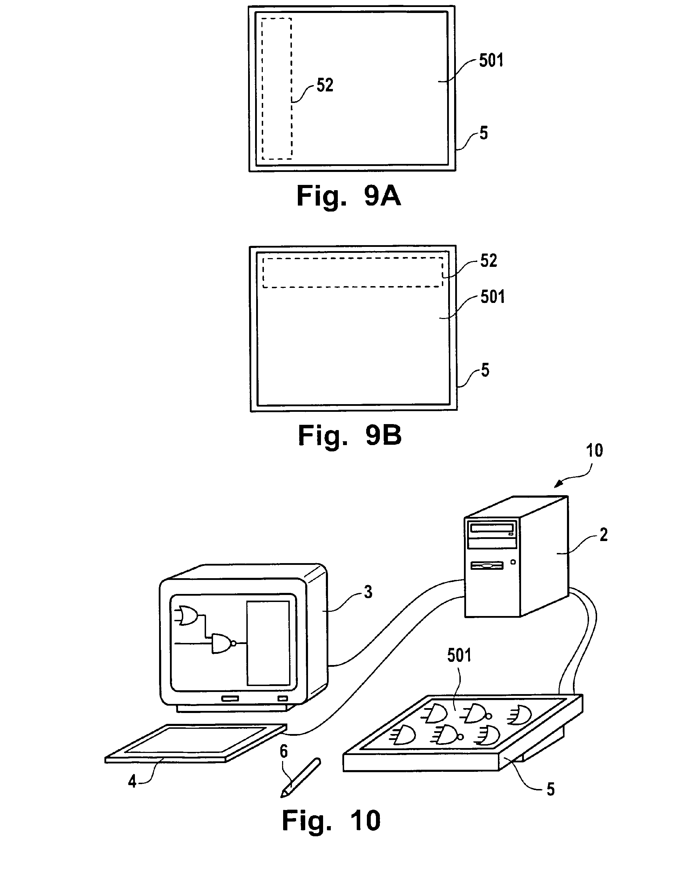

This case will now be described below with reference to Fig. 9.

Figs. 9A and 9B each show a detection area formed in a specific region in the operation area of the FPD tablet 5.

Referring to Fig. 9A, a detection area 52 is formed in only a portion on the left of the operation area in the liquid crystal display panel 501 of the FPD tablet 5. Radio waves are generated from loop coils in the detection area 52 in the transmit mode of the FPD tablet 5.

In this case, the tablet 4 is arranged on the right of the FPD tablet 5, thus minimizing the possibility that radio waves generated from the loop coils of the FPD tablet 5 affect the operation of the tablet 4 in the receive mode.

Referring to Fig. 9B, the detection area 52 is formed partially in the upper portion of the operation area in the liquid crystal display panel 501 of the FPD tablet 5. In this case, the tablet 4 is arranged on the side opposite to the detection area 52 in the FPD tablet 5, thus minimizing the possibility that radio waves generated from the loop coils of the FPD tablet 5 affect the operation of the tablet 4 in the receive mode.

In other words, even when the tablet 4 and the FPD tablet 5 are arranged close to each other, radio waves are generated from only some of the loop coils in the input unit 51 of the FPD tablet 5 in the transmit mode, the some loop coils being arranged away from the tablet 4, thus minimizing the possibility that the radio waves affect the operation of the tablet 4 in the receive mode.

In Fig. 1, according to the present embodiment, the input system 1 uses the liquid crystal display panel 501 as the main display and the monitor 3 as the sub display. The present invention is not limited to the case. According to a modification of the present embodiment, the monitor 3 can be used as a main display and the liquid crystal display panel 501 can be used as a sub display. The modification will now be described with reference to Fig. 10.

Fig. 10 schematically shows the structure of an input system 10 according to the modification of the embodiment of the present invention. The input system 10 includes a computer 2, a monitor 3, a tablet 4, an FPD tablet 5, and an input pen 6 in the same way as the input system 1.

Referring to Fig. 10, a computer aided design (CAD) application program is being executed by the computer 2, a drawing area to make a drawing is displayed on the screen of the monitor 3, and a subscreen to select various tools for preparation of drawing is displayed on the liquid crystal display panel 501 of the FPD tablet 5.

Referring to Fig. 10, a user of the input system 10 takes the input pen 6 and, while viewing the drawing area displayed on the monitor 3, operates the input pen 6 in the operation area of the tablet 4 to make a drawing. During making the drawing, the user operates the input pen 6 on the liquid crystal display panel 501 of the FPD tablet 5 as necessary, so that the user can select one of various tools for the drawing preparation.

In the foregoing embodiment, the FPD tablet 5 has the liquid crystal display panel 501. The FPD tablet 5 can include a thin flat display panel such as an electroluminescence (EL) panel instead of the liquid crystal display panel 501.

Further, in the foregoing embodiment, radio waves are generated from the loop coils of the tablet 4 or the FPD tablet 5 to detect the position of the input pen 6 including the resonant circuit 60. The present invention is not limited to the case. The position of the input pen 6 can be detected by the tablet 4 or the FPD tablet 5 according to another method.

For example, an input system includes a pointing device corresponding to the input pen 6 and a plurality of coordinate input devices (corresponding to the tablet 4 and the FPD tablet 5) for detecting a position designated by the pointing device. Each coordinate input device includes sound wave generating means for generating sound waves (ultrasonic waves). When sound waves (ultrasonic waves) are generated by the sound wave generating means to detect a position designated by the pointing device, the process of controlling coordinate input devices according to the above embodiment can be executed. The present invention can eliminate a problem in that sound waves (ultrasonic waves) generated from the respective coordinate input devices interfere each other, each coordinate input device is prevented from detecting sound waves (ultrasonic waves), and the coordinates cannot be properly detected.

According to the foregoing embodiment, in the processes shown in Figs. 7 and 8, when the tablet 4 or the FPD tablet 5 is in the state in which the position of the input pen 6 cannot be detected, the operation thereof in the transmit mode is controlled. The present invention is not limited to the embodiment. For example, only the operation of the FPD tablet 5 in the transmit mode can be controlled. As mentioned above, the radio power generated from each loop coil of the FPD tablet 5 is higher than the tablet 4. Accordingly, when the radio waves generated from the loop coil of the FPD tablet 5 are prevented from affecting the operation of the tablet 4 in the receive mode, a problem of the close arrangement of the tablet 4 and the FPD tablet 5, i.e., a disadvantage in that the performance of each tablet is degraded can be overcome.

In the foregoing embodiment, the input system 1 is constructed such that the tablet 4 or the FPD tablet 5 detects the position of the input pen 6 to generate an operation signal indicating the coordinates of the position designated by the input pen 6 to the computer 2. The present invention is not limited to the case. For example, the input system can be constructed such that the coordinates of a position designated by the input pen 6 are detected to generate an operation signal indicating the amount of movement and the direction of the movement of the input pen 6 per unit time.

Further, the input system can be constructed such that a switch is provided for the input pen 6 and the operation of the switch is detected by the tablet 4 or the FPD tablet 5. When the resonant circuit 60 of the input pen 6 is designed so that the oscillation frequency varies depending on the operation of the switch, a change in phase or period of radio waves generated from the coil 61 is detected by the tablet 4 or the FPD tablet 5, so that the operation of the switch in the input pen 6 can be detected.

The number of loop coils in the tablet 4 and that in the FPD tablet 5, and the constructional detail of the input system 1 and that of the input system 10 can be arbitrarily changed without departing from the spirit and scope of the present invention.
[FIG. 2]
   402: PROCESSING CIRCUIT
   405: TRANSMIT-RECEIVE SWITCHING CIRCUIT
   407: A/D CONVERTER
[FIG. 3]
   413: PORT
   a: A/D CONVERTER
   b: TRANSMIT-RECEIVE SWITCHING CIRCUIT, SELECTION CIRCUIT
   c: COMPUTER
[FIG. 4]
   501: LIQUID CRYSTAL DISPLAY PANEL
   502: DRIVING CIRCUIT
   512: PROCESSING CIRCUIT
   515: TRANSMIT-RECEIVE SWITCHING CIRCUIT
   517: A/D CONVERTER
[FIG. 5]
   523: PORT
   a: A/D CONVERTER
   b: TRANSMIT-RECEIVE SWITCHING CIRCUIT, SELECTION CIRCUIT
   c: COMPUTER
[FIG. 6]
   3: MONITOR
   4: TABLET
   23: STORAGE UNIT
   24: INPUT UNIT
   25: DISPLAY CONTROL UNIT
   50: DISPLAY UNIT OF FPD TABLET
   51: INPUT UNIT OF FPD TABLET
[FIG. 7]
   S11: DOES FPD TABLET DETECT INPUT PEN?
   S12: TRANSMIT TRANSMISSION INTERRUPTION COMMAND TO TABLET
   S13: ENABLE TABLET
   S14: DOES TABLET DETECT INPUT PEN?
   S15: TRANSMIT TRANSMISSION INTERRUPTION COMMAND TO FPD TABLET
   S16: ENABLE FPD TABLET
[FIG. 8]
   S21: DOES TABLET DETECT INPUT PEN?
   S22: TRANSMIT TRANSMISSION INTERRUPTION COMMAND TO FPD TABLET
   S23: ENABLE FPD TABLET

## Claims

1. An input system(1,10) having a plurality of coordinate input devices(4,5) for performing a detection operation to detect a position designated by a pointing device(6) and generating the coordinates of the position detected by the detection operation, the input system comprising:
specifying means (2; 21) for, among the coordinate input devices(4,5), specifying one or a plurality of coordinate input devices(4,5) in a state in which the position designated by the pointing device(6) is not detected; and
change instructing means (2; 21, 24; 402, 411, 413; 512, 521, 523) for controlling the detection operation of the coordinate input device(4,5) specified by the specifying means.

2. The system(1,10) according to Claim 1, wherein when one of the coordinate input devices(4,5) detects the position designated by the pointing device(6), the specifying means being adapted to specify the other device or the other devices as a coordinate input device or coordinate input devices in the state in which the position designated by the pointing device is not detected.

3. The system(1,10) according to Claim 1 or 2, wherein
each coordinate input device(4,5) includes detection-operation control means (402; 512) for changing the detection operation to a specific state when receiving a control signal from the change instructing means.

4. The system(1,10) according to Claim 3, wherein
each coordinate input device(4,5) includes a plurality of loop coils and means for generating radio waves (4, 401, 403, 404, 405; 51, 511, 513, 514, 515) from the loop coils to detect a position designated by the pointing device(6) using the radio waves, and
when receiving the predetermined signal, the detection-operation control means of the coordinate input device being adapted to interrupt the operation for generating the radio waves from the loop coil.

5. The system(1,10) according to Claim 3, wherein
each coordinate input device(4,5) includes a plurality of loop coils and means for generating radio waves (4, 401, 403, 404, 405; 51, 511, 513, 514, 515) from the loop coils to detect a position designated by the pointing device(6) using the radio waves, and
when receiving the predetermined signal, the detection-operation control means of the coordinate input device being adapted to limit the loop coils for generating the radio waves in the detection operation to only some of the loop coils.

6. The system(1) according to any one of Claims 1 to 3, wherein each coordinate input device(4,5) includes means for generating sound waves and detects the position designated by the pointing device(6) using the sound waves.

7. A coordinate input device(4,5) for performing a detection operation to detect a position designated by a pointing device(6) and generating the coordinates of the position detected by the detection operation, the device comprising:
detection-operation control means (402, 411, 413; 512, 521, 523) for changing the detection operation to a specific state when receiving a control signal.

8. The coordinate input device (4,5) of claim 7, wherein the detection operation is at least temporarily disabled in response to the control signal.

9. The coordinate input device (4,5) of claim 8, wherein the detection operation is at least temporarily enabled in response to a second control signal received by the detection-operation control means.

10. The coordinate input device (4,5) of claim 7, 8 or 9, the detection-operation control means being adapted to receive the control signal from an external
electronic device (2; 24).

11. The device(4,5) according to any one of claims 7 to 10, wherein
the coordinate input device(4,5) includes a plurality of loop coils and means for generating radio waves (4, 401, 403, 404, 405; 51, 511, 513, 514, 515) from the loop coils to detect the position designated by the pointing device(6) using the radio waves, and
when receiving the predetermined signal, the detection-operation control means being adapted to interrupt the operation for generating the radio waves from the loop coils.

12. The device according to any one of claims 7 to 10, wherein
the coordinate input device includes a plurality of loop coils and means for generating radio waves (4, 401, 403, 404, 405; 51, 511, 513, 514, 515) from the loop coils to detect the position designated by the pointing device using the radio waves, and
when receiving the predetermined signal, the detection-operation control means being adapted to limit the loop coils for generating the radio waves in the detection operation to only some of the loop coils(52).

13. A computer program product comprising instructions for execution by an electronic apparatus (2) connected to a plurality of coordinate input devices (4, 5) for performing a detection operation to detect a position designated by a pointing device (6) and generating the coordinates of the position detected by the detection operation, the program enabling the electronic apparatus to function as:
specifying means (2; 21) for, among the coordinate input devices, specifying one or a plurality of coordinate input devices in a state in which the position designated by the pointing device is not detected; and
change instructing means (2; 21, 24)for controlling the detection operation of the coordinate input device specified by the specifying means.

14. An electronic device (2) comprising
- means (24, 25) for coupling at least first and second pen entry devices (4,5) thereto,
- means (21) for determining if one of the at least first and second pen entry devices (4,5) does not detect an entry pen (6),
- means (21, 24)for at least temporarily disabling the one of the of the at least first and second pen entry devices (4,5).

15. An electronic circuit (402; 512) comprising
- interface means (412; 522) for receiving a control signal from an external electronic device (2),
- processing means (411, 521) for selecting a first or a second mode of operation for a coordinate input device using the control signal, wherein in the first mode a coordinate detection operation is enabled and in the second mode the coordinate detection operation is at least temporarily disabled.
